(19) Europäisches Patentamt
European Patent Office
Office européen des brevets

(11) **EP 2 441 999 B1**

(12) **EUROPEAN PATENT SPECIFICATION**

(45) Date of publication and mention of the grant of the patent:
**26.03.2014 Bulletin 2014/13**

(21) Application number: **12151070.5**

(22) Date of filing: **09.04.2010**

(51) Int Cl.:
*F16L 27/073* (2006.01)   *F16L 25/00* (2006.01)
*F16L 13/14* (2006.01)   *F02M 25/07* (2006.01)
*F16J 15/06* (2006.01)   *F16J 15/08* (2006.01)
*F16L 25/12* (2006.01)   *F16L 27/12* (2006.01)
*F16L 51/00* (2006.01)   *F16L 51/02* (2006.01)
*F16L 57/06* (2006.01)   *F01N 13/18* (2010.01)
*F01N 13/10* (2010.01)

(54) **Sealing joint for connecting adjoining duct pieces in an engine exhaust system**

Dichtungsverbindung zum Anschliessen von Rohrteilen in einem Motorabgassystem

Joint d'étanchéité pour raccorder des pièces contiguës de tuyau dans un système d'échappement de moteur

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.07.2009 US 499423**
**13.08.2009 US 233511 P**
**13.08.2009 US 233670 P**
**30.03.2010 US 750293**
**17.07.2009 EP 09165847**

(43) Date of publication of application:
**18.04.2012 Bulletin 2012/16**

(62) Document number(s) of the earlier application(s) in accordance with Art. 76 EPC:
**10159566.8 / 2 273 175**

(73) Proprietor: **Parker-Hannifin Corporation**
**Cleveland, Ohio 44124-4141 (US)**

(72) Inventors:
• **Cornett, Kenneth W**
**Ivoryton, CT Connecticut 06442 (US)**
• **Dudzinski, Paul A**
**East Berlin, CT Connecticut 06023 (US)**
• **More, Dominick**
**Middletown, CT Connecticut 06457 (US)**
• **Payne, Jeremy**
**West Haven, CT Connecticut 06516 (US)**

(74) Representative: **Belcher, Simon James**
**Urquhart-Dykes & Lord LLP**
**Tower North Central**
**Merrion Way**
**Leeds LS2 8PA (GB)**

(56) References cited:
**US-A- 3 689 114     US-A1- 2008 017 269**

## Description

This invention relates to a sealing joint, especially for connecting adjoining duct pieces in an engine exhaust system, and to ductwork comprising connected duct pieces and an engine exhaust system which includes such ductwork.

An engine exhaust system typically comprises ductwork with a plurality of duct pieces that are connected together to form conveyance passages for exhaust gasses. For example, a duct piece can be fixed to the exhaust manifold head (and aligned with one or more exhaust ports) and connected to other duct pieces to convey exhaust gas to a vehicle's outlet pipe. If the engine includes an EGR (i.e., exhaust gas recirculation) design, duct pieces can be interconnected to convey exhaust gas back into the air intake line for reintroduction into the combustion chamber. Such a multi-piece construction of the ductwork allows the engine exhaust system to accommodate the thermal expansion-contraction that occurs during engine warm-up, operation, and/or cool-down.

Diesel engine manufacturers conventionally use piston ring type seals in exhaust system applications. The piston ring seals allow for significant relative motion and movement for the exhaust manifold components to thermally expand. However, piston rings are not continuous seals. Piston rings have a cut in them to allow flexibility in the hoop direction. This gap provides a leak path for exhaust gas to leak out of the exhaust system. This leaked exhaust bypasses the catalytic converter, exhaust gas recirculation, and/or particle collection components. As exhaust emissions get tighter and tighter, these small exhaust leaks need to be prevented and all exhaust gas needs to be collected and treated through the exhaust system.

Improved sealing effectiveness of exhaust components and sub-components is required to meet Euro VI emission standards scheduled to take effect in January 2013. A sealing joint is provided for interconnecting duct pieces in an engine exhaust system. The sealing joint is adapted to accommodate a female-to-female interconnection between duct pieces and it has a continuous circumferential construction. Accordingly, there are no inherent leak paths through which exhaust gas can escape upstream of emission-control devices (e.g., catalytic converter, particle collector, etc.). The sealing joint of the present invention can provide improved sealing through increased contact load, improved wear resistance and simplified installation by incorporating an expand-in place "thermally activated" construction.

US-3689114 discloses a sheet metal sleeve for fitting over the adjacent ends of two ducts to couple them together. The inside of the sleeve is provided with a heat melting adhesive for securing the sleeve on to the ends of the ducts and to seal the joint between the duct and the sleeve.

The thermally activated sealing joint described and claimed herein offers the advantage of ease of installation in high temperature applications such as coupling diesel exhaust manifold sections. The sealing joint can be installed with a clearance fit, therefore requiring little to no installation force. It derives this advantage through the use of a material with a high level of thermal expansion to generate a hydrostatic pressure. This pressure causes specific areas of the sealing joint to permanently expand and seal against the cavity into which it has been installed.

The present invention provides a thermally expandable sealing joint as defined in claim 1.

Accordingly, a thermally expandable sealing joint includes a tubular body having a rigid inner sleeve and a flexible outer sleeve joined to the inner sleeve, the tubular body extending along a longitudinal axis and having a first end portion and a second end portion and a bridge portion extending between the first end portion and the second end portion; a first annular chamber between the inner and outer sleeves in the first end portion and a second annular chamber between the inner and outer sleeves in the second end portion; a thermally expandable material contained independently within the first annular chamber and the second annular chamber, wherein upon being heated within the chamber, the thermally expandable material expands to effect a radially outward, permanent deformation of the outer sleeve in the first end portion and the second end portion.

The rigid inner sleeve and flexible outer sleeve may each be formed of a metal or metal alloy. The metal or metal alloy of the inner sleeve may be the same as or different from the metal or metal alloy of the outer sleeve. In one embodiment, the thickness of the inner sleeve is greater than the thickness of the outer sleeve.

The thermally expandable material may be a liquid or a solid. For example, the liquid may be water or ethanol or a mixture thereof. The solid may be a metal or metal alloy. Alternatively, the thermally expandable material may include an ultra high molecular weight polyethylene or other polymeric material.

In a further aspect of the invention, there is provided ductwork that includes a first duct piece, a second duct piece, and the sealing joint as defined above, interconnecting adjoining ends of the first duct piece and the second duct piece; wherein: the first duct piece includes a passage for conveying fluid gas and a female recess, coextensive with the passage, on its adjoining end; the second duct piece includes a passage for conveying combustion gas and a female recess, coextensive with the passage on its adjoining end; the first end portion of the tubular body is at least partially positioned within the female recess of the first duct piece; the second end portion of the tubular body is at least partially positioned with the female recess of the second duct piece; and the bridge portion of the tubular body extends across a gap between the adjoining ends of the duct pieces and/or is positioned partially within the female recesses.

In yet a further aspect of the invention, there is an engine exhaust system that includes the ductwork, wherein combustion gas passes through the passage in the first duct piece, through the passage in the tubular body of the sealing joint, and through the passage in the second duct piece.

Embodiments of the invention are described below by way of example with reference to the accompanying drawings, in which:

> Figure 1 is a schematic drawing of an engine incorporating the sealing joint in its ductwork.
> Figures 2(a) and 2(b) are sectional views of an embodiment of the sealing joint having an expandable annular chamber before and after thermal expansion, respectively.
> Figures 3(a) and 3(b) are sectional views of an embodiment of the sealing joint having an expandable annular channel before and after thermal expansion, respectively.

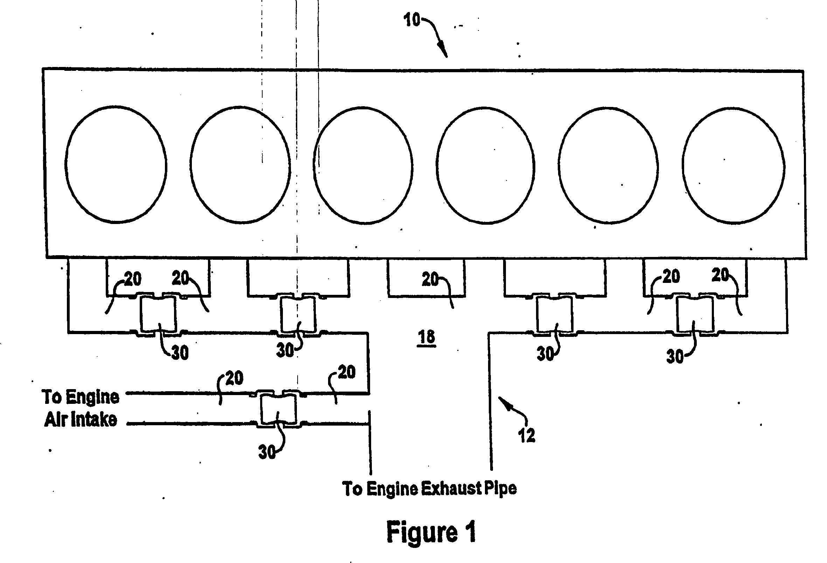

Referring to the drawings, Fig. 1 shows an exemplary engine 10 (*e.g.,* a six-cylinder diesel engine) which includes an exhaust system 12 comprising ductwork 18 with a plurality of duct pieces 20 that are connected together to form conveyance passages for exhaust gasses. For example, a plurality of the duct pieces 20 can be interconnected to form an exhaust manifold head that discharges to an exit passage to convey exhaust combustion gas to a vehicle's exhaust pipe. If the engine 10 includes an EGR (i.e., exhaust gas recirculation) design, certain duct pieces 20 can be interconnected to convey a portion of the exhaust gas back to the engine's air intake.

Adjoining duct pieces 20 in the engine exhaust system 12 are interconnected by sealing joints 30. The multi-piece construction of the ductwork, and the interconnection of the duct pieces 20 by the sealing joints 30, allows the exhaust system 12 to accommodate the thermal expansion-contraction that occurs during engine warm-up, operation, and/or cool-down. The sealing joints 30 compensate for movement of the duct pieces towards and away from each other during heating and cooling, without compromising any sealing capacity.

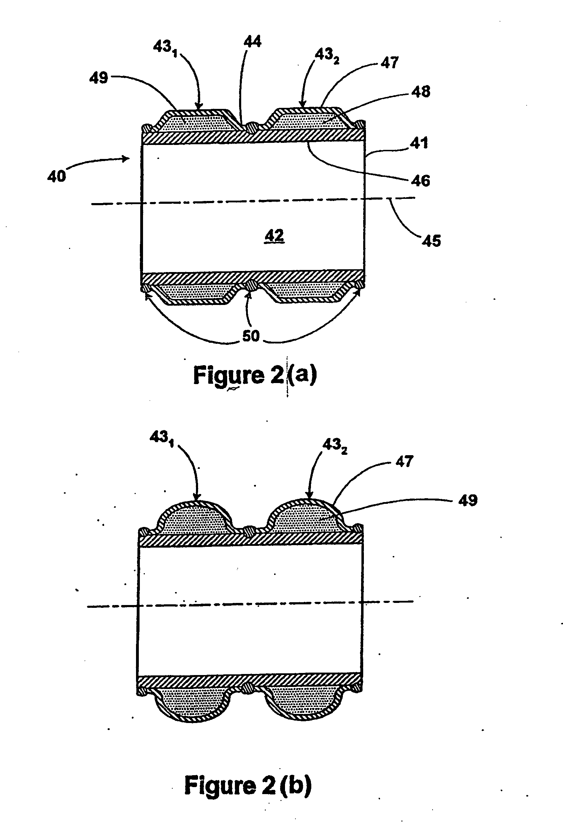

Figure 2(a) shows an embodiment of a thermally expandable sealing joint 40 prior to expansion. A tubular body 41 has an hourglass shape and includes passage 42 extending axially through it. The tubular body 41 includes an inner sleeve 46 having a cylindrical shape, and outer sleeve 47 configured to form an annular chamber 48 at each of the first end portion $43_1$ and at the second end portion $43_2$. Bridge portion 44 extends between the first end portion $43_1$ and the second end portion $43_2$. The outer sleeve 47 is joined to the inner sleeve 46 by attachments 50. Attachments 50 may be formed, for example, by welding, brazing or by mechanical attachment. Within each annular chamber 48 is contained a high thermal expansion material 49. The flexible outer sleeve 47 is constructed of a thinner gauge of material than the rigid inner sleeve 46, and is plastically deformable. The rigid inner sleeve 46 and flexible outer sleeve 47 may be made of a metal alloy, such as a stainless steel or nikel alloy. The inner and outer sleeves may be made of the same alloy or different alloys.

The sealing joint 40 is positioned so that first end portion $43_1$ is a least partially within the female recess of the first duct piece, and the second end portion is at least partially within the recess of the second duct piece. Once the engine is started, the sealing joint 40 is subjected to hot exhaust gases which heat the sealing joint to a high temperature and cause the high thermal expansion material 49 to expand. As shown in Figure 2(b), as the high thermal expansion material 49 expands, the thin flexible outer sleeve 47 is plastically deformed. Sealing joint 40 expands radially from axis 45 at both first end portion $43_1$ and second end portion $43_2$ to increase the diameter of the sealing joint and effect a seal within the recesses of the duct pieces. The increase in diameter that occurs is due to plastic deformation of the outer sleeve and is permanent. The increase in diameter of the sealing joint generates a relatively low level of load and is essentially limited to the size of the mating bore. This low load, along with the generous contact area, keeps the contact stresses low at the sealing surface, which helps to minimize wear.

In one embodiment, the annular chamber 48 is provided with a vent port to relieve the pressure within the chamber 48 and to prevent the outer sleeve 47 from rupturing. Alternatively or in addition, the deformable outer sleeve 47 is constructed so that it has sufficient thickness to prevent rupture, yet is capable of being plastically deformed:

The high thermal expansion material 49 within the annular chamber 48 may be solid or liquid. The temperature at which the material 49 expands is dependent upon the particular application in which the sealing joint is used. If the sealing joint is used in a relatively low temperature application, a material having a very high coefficient of thermal expansion (CTE) should be chosen. In an automotive exhaust application, an activation temperature, i.e., temperature for causing expansion of the sealing joint, as high as 600°C would be acceptable. The high thermal expansion material 49 within the chamber 48 may, or may not be vented to prevent excess pressure from causing damage through over-expansion of the outer sleeve 47. In one embodiment, the high thermal expansion material 49 is a solid material and the outer sleeve 47 includes a small pinhole for venting the contents of the chamber 48.

The CTE of the material 49 within the annular chamber 48 must exceed that of the material used for the rigid inner sleeve 46 and the flexible outer sleeve 47, and of the material used to construct the hardware, e.g., duct pieces, into which the sealing joint is positioned. For example, the inner and outer sleeves may be constructed of stainless steel with an estimated CTE of $17 \times 10^{-3}$ m/m·K or nickel alloy 718 with an estimated CTE of 12 $\times 10^{-3}$ m/m·K. The hardware may be constructed of cast iron having an approximate CTE of 12 × 10⁻³ m/m. K.

The CTE of suitable high thermal expansion materials may be expressed by the following equation:

$$\alpha_{\min} = \alpha_1 + \frac{2.53 \times 10^{-6}}{T_a - 23}$$

where

$\alpha_{\min}$ is the minimum required linear CTE of the high thermal expansion material in m/m·K;
$\alpha_1$ is the greater of the linear CTEs of the outer sleeve and the hardware; and
$T_a$ is the temperature (°C) at which the seal must activate.

In one embodiment, the criteria for determining whether an acceptable seal is formed is a minimum expansion of 0.00253 units per unit size interference. As an example, to meet the criteria, for a one inch diameter duct, the sealing joint must be capable of expanding to a minimum of 25.46 mm (1.00253 inch) to form an acceptable seal. For a two-inch diameter duct, the sealing joint must be capable of expanding to a minimum of 50.93 mm (2.0051 inch). By using a thermal expansion material having a CTE greater than $\alpha_{\min}$, an even more robust seal can be obtained.

Examples of suitable liquid high thermal expansion materials include water, ethanol, and mixtures of water and ethanol. Due to the flammability of ethanol, mixtures of water and ethanol are preferred over the use of straight ethanol. Examples of suitable solid high thermal expansion materials include metals and metal alloys, and polymeric materials. Aluminium and magnesium and their alloys are particular examples of solid high CTE materials. Polyethylene is an example of a suitable polymeric material having a high CTE. An ultra high molecular weight polyethylene commercially available from Ticona under the trade name GUR is one example of a useful solid material.

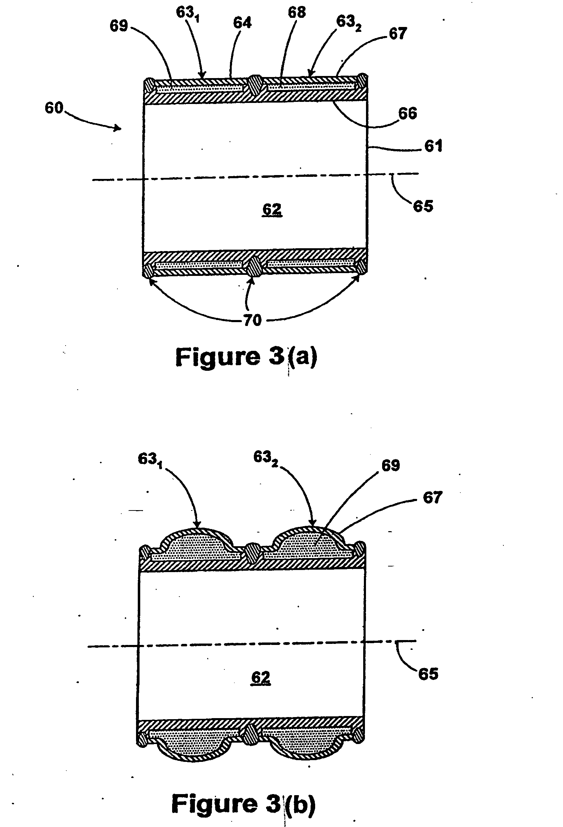

Figure 3(a) shows a further embodiment of a thermally expandable sealing joint prior to expansion. A tubular body 61 has a cylindrical shape and includes passage 62 extending axially through it. The tubular body 61 includes an inner sleeve 66 having a cylindrical shape, and outer sleeve 67 joined to inner sleeve 66. Annular channels 68 are formed in inner sleeve 66 at each of the first end portion 631 and at the second end portion 632. For example, annular channels 68 may be cut or machined into the outer surface of inner sleeve 66. Bridge portion 64 extends between the first end portion 631 and the second end portion 632. The outer sleeve 67 is joined to the inner sleeve 66 by attachments 70 at the bridge portion 64 between channels 68 and at each end portion 631 and 632 adjacent the outermost edge of the channels 68. Attachments 70 may be formed, for example, by welding, brazing or by mechanical attachment. Within each annular channel 68 is contained a high thermal expansion material 69. Outer sleeve 67 is constructed of a thinner gauge of material than inner sleeve 66.

The sealing joint 60 is positioned so that first end portion 631 is a least partially within the female recess of the first duct piece, and the second end portion is at least partially within the recess of the second duct piece. Thermal activation occurs when the sealing joint 60 is subjected to hot exhaust gases. As shown in Figure 3(b), as the high expansion material 69 expands, the thin flexible outer sleeve 67 is plastically deformed. Sealing joint 60 expands radially from axis 65 at both first end portion 631 and second end portion 632 so that sealing joint 60 assumes an hourglass shape to effect a seal within the recesses of the duct pieces. Deformation of the outer sleeve 67 is permanent.

In connection with the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

**Claims**

1. A thermally expandable sealing joint (40) comprising:

a tubular body (41) comprising a rigid inner sleeve (46) and a flexible outer sleeve (47) joined to the inner sleeve, the tubular body extending along a longitudinal axis (45) and having a first end portion ($43_1$) and a second end portion ($43_2$) and a bridge portion (44) extending between the first end portion and the second end portion,
**characterised in that** the tubular body includes a rigid inner sleeve (46), the joint having a first annular chamber (48) between the inner and outer sleeves in the first end portion and a second annular chamber between the inner and outer sleeves in the second end portion, the joint including a thermally expandable material (49) contained independently within the first annular chamber and the second annular chamber, wherein upon being heated within the chamber, the thermally expandable material expands to effect a radially outward, permanent deformation of the outer sleeve in the first end portion and the second end portion.

2. The sealing joint of claim 1 wherein the inner sleeve (46) and outer sleeve (47) are each formed independently of a metal or metal alloy.

3. The sealing joint of claim 1 or claim 2 wherein the thermally expandable material (49) comprises a liquid.

4. The sealing joint of claim 1 or claim 2 wherein the thermally expandable material (49) comprises a metal or metal alloy.

5. The sealing joint of claim 1 or claim 2 wherein the thermally expandable material (49) comprises a polymeric material.

6. The sealing joint of any one of claims 1 to 5 wherein the tubular body (41) is cylindrically shaped.

7. The sealing joint of any one of claims 1 to 5 wherein the first end portion and the second end portion each have an outer diameter that is greater than the outer diameter of the bridge portion (44).

8. The sealing joint of any one of claims 1 to 7 wherein the thickness of the inner sleeve is greater than the thickness of the outer sleeve.

9. The sealing joint of any one of the preceding claims wherein the tubular body includes a wear-resistant coating on its outer surface.

10. The sealing joint of claim 9 wherein the wear-resistant coating comprises a matrix phase comprising a metal or metal alloy, and a reinforcing phase comprising particles of an alloy having the formula MCrAlY wherein M is a metal or metal alloy, Cr is chromium, Al is aluminium and Y is yttrium.

11. Ductwork comprising a first duct piece, a second duct piece, and the sealing joint set forth in any one of the preceding claims interconnecting adjoining ends of the first duct piece and the second duct piece; wherein:

the first duct piece includes a passage for conveying fluid gas and a female recess, coextensive with the passage, on its adjoining end; the second duct piece includes a passage for conveying combustion gas and a female recess, coextensive with the passage on its adjoining end;

the first end portion of the tubular body is at least partially positioned within the female recess of the first duct piece; the second end portion of the tubular body is at least partially positioned with the female recess of the second duct piece; and the bridge portion of the tubular body extends across a gap between the adjoining ends of the duct pieces and/or is positioned partially within the female recesses.

12. An engine exhaust system comprising ductwork as claimed in claim 11, wherein combustion gas passes through the passage in the first duct piece, through the passage in the tubular body of the sealing joint , and through the passage in the second duct piece.

**Patentansprüche**

1. Eine thermisch dehnbare Dichtverbindung (40) mit:

einem röhrenförmigen Körper (41) mit einer steifen Innenhülse (46) und einer mit der Innenhülse verbundenen, flexiblen Außenhülse (47), wobei sich der röhrenförmige Körper entlang einer Längsachse (45) erstreckt und einen ersten Endabschnitt ($43_1$) und einen zweiten Endabschnitt ($43_2$) sowie einen Brückenabschnitt (44) hat, der sich zwischen dem ersten Endabschnitt und dem zweiten Endabschnitt erstreckt, **dadurch gekennzeichnet, dass** der röhrenförmige Körper eine steife Innenhülse (46) umfasst, wobei die Verbindung im ersten Endabschnitt eine erste Ringkammer (48) zwischen der Innenhülse und der Außenhülse und im zweiten Endabschnitt eine zweite Ringkammer zwischen der Innenhülse und der Außenhülse hat, wobei die Verbindung ein thermisch ausdehnbares Material (49) umfasst, das unabhängig innerhalb der ersten Ringkammer und der zweiten Ringkammer enthalten ist, wobei sich das thermisch ausdehnbare Material durch Erwärmen innerhalb der Kammer ausdehnt, so dass dieses eine radial nach außen gerichtete, permanente Deformation der Außenhülse in dem ersten Endabschnitt und dem zweiten Endabschnitt bewirkt.

2. Die Dichtverbindung nach Anspruch 1, wobei die Innenhülse (46) und die Außenhülse (47) unabhängig voneinander aus einem Metall oder einer Metalllegierung gebildet sind.

3. Die Dichtverbindung nach Anspruch 1 oder Anspruch 2, wobei das thermisch ausdehnbare Material (49) eine Flüssigkeit umfasst.

**4.** Die Dichtverbindung nach Anspruch 1 oder Anspruch 2, wobei das thermisch ausdehnbare Material (49) ein Metall oder eine Metalllegierung umfasst.

**5.** Die Dichtverbindung nach Anspruch 1 oder Anspruch 2, wobei das thermisch ausdehnbare Material (49) ein Polymermaterial umfasst.

**6.** Die Dichtverbindung nach einem der Ansprüche 1 bis 5, wobei der röhrenförmige Körper (41) zylindrisch geformt ist.

**7.** Die Dichtverbindung nach einem der Ansprüche 1 bis 5, wobei sowohl der erste Endabschnitt als auch der zweite Endabschnitt einen Außendurchmesser haben, der größer ist als der Durchmesser des Brückenabschnitts (44).

**8.** Die Dichtverbindung nach einem der Ansprüche 1 bis 7, wobei die Dicke der Innenhülse größer ist als die Dicke der Außenhülse.

**9.** Die Dichtverbindung nach einem der vorhergehenden Ansprüche, wobei der röhrenförmige Körper eine verschleißresistente Beschichtung auf seiner Außenfläche umfasst.

**10.** Die Dichtverbindung nach Anspruch 9, wobei die verschleißresistente Beschichtung eine Matrixphase, die ein Metall oder eine Metalllegierung umfasst, und eine Armierungsphase aufweist, die Partikel einer Legierung umfasst, die die Formel MCrAlY hat, wobei M ein Metall oder eine Metalllegierung, Cr Chrom, Al Aluminium und Y Yttrium ist.

**11.** Rohrwerk, das ein erstes Rohrstück, ein zweites Rohrstück und die Dichtverbindung nach einem der vorhergehenden Ansprüche aufweist, welche Verbindungsenden des ersten Rohrstücks und des zweiten Rohrstücks miteinander verbindet, und bei dem:

    das erste Rohrstück einen Durchgang zum Fördern von Fluidgas und gleichlaufend mit dem Durchgang an dessen Verbindungsende eine Aufnahme-Ausnehmung umfasst;
    das zweite Rohrstück einen Durchgang zum Fördern von Abgas und gleichlaufend mit dem Durchgang an dessen Verbindungsende eine Aufnahme-Ausnehmung umfasst;
    der erste Endabschnitt des röhrenförmigen Körpers zumindest teilweise innerhalb der Aufnahme-Ausnehmung des ersten Rohrstücks angeordnet ist;
    der zweite Endabschnitt des röhrenförmigen Körpers zumindest teilweise in der Aufnahme-Ausnehmung des zweiten Rohrstücks angeordnet ist; und

    der Brückenabschnitt des röhrenförmigen Körpers sich über einen Spalt zwischen den benachbarten Enden der Rohrstücke erstreckt und/oder teilweise innerhalb der Aufnahme-Ausnehmungen angeordnet ist.

**12.** Motorabgasanlage, die ein Rohrwerk nach Anspruch 11 aufweist, bei welchem Abgas durch den Durchgang in dem ersten Rohrstück, durch den Durchgang in dem röhrenförmigen Körper der Dichtverbindung und durch den Durchgang in dem zweiten Rohrstück hindurchtritt.

## Revendications

**1.** Joint d'étanchéité thermodilatable (40) comprenant :

    un corps tubulaire (41) comprenant un manchon interne rigide (46) et un manchon externe souple (47) assemblé au manchon interne, le corps tubulaire s'étendant le long d'un axe longitudinal (45) et ayant une première partie d'extrémité ($43_1$) et une seconde partie d'extrémité ($43_2$) et une partie de pont (44) s'étendant entre la première partie d'extrémité et la seconde partie d'extrémité,
    **caractérisé en ce que** le corps tubulaire comprend un manchon interne rigide (46), le joint ayant une première chambre annulaire (48) entre les manchons interne et externe dans la première partie d'extrémité et une seconde chambre annulaire entre les manchons externe et interne dans la seconde partie d'extrémité, le joint comportant un matériau thermodilatable (49) contenu indépendamment à l'intérieur de la première chambre annulaire et de la seconde chambre annulaire, dans lequel lorsqu'il est chauffé à l'intérieur de la chambre, le matériau thermodilatable se dilate pour produire une déformation permanente radialement vers l'extérieur du manchon externe dans la première partie d'extrémité et la seconde partie d'extrémité.

**2.** Joint d'étanchéité selon la revendication 1, dans lequel le manchon interne (46) et le manchon externe (47) sont chacun formés indépendamment d'un métal ou d'un alliage métallique.

**3.** Joint d'étanchéité selon la revendication 1 ou la revendication 2, dans lequel le matériau thermodilatable (49) comprend un liquide.

**4.** Joint d'étanchéité selon la revendication 1 ou la revendication 2, dans lequel le matériau thermodilatable (49) comprend un métal ou un alliage métallique.

**5.** Joint d'étanchéité selon la revendication 1 ou la revendication 2, dans lequel le matériau thermodilatable (49) comprend un matériau polymère.

6. Joint d'étanchéité selon l'une quelconque des revendications 1 à 5, dans lequel le corps tubulaire (41) est de forme cylindrique.

7. Joint d'étanchéité selon l'une quelconque des revendications 1 à 5, dans lequel la première partie d'extrémité et la seconde partie d'extrémité ont chacune un diamètre externe qui est supérieur au diamètre externe de la partie de pont (44).

8. Joint d'étanchéité selon l'une quelconque des revendications 1 à 7, dans lequel l'épaisseur du manchon interne est supérieure à l'épaisseur du manchon externe.

9. Joint d'étanchéité selon l'une quelconque des revendications précédentes, dans lequel le corps tubulaire comprend un revêtement résistant à l'usure sur sa surface externe.

10. Joint d'étanchéité selon la revendication 9, dans lequel le revêtement résistant à l'usure comprend une phase de matrice comprenant un métal ou alliage métallique , et une phase de renfort comprenant des particules d'un alliage ayant la formule MCrAlY, où M est un métal ou alliage métallique, Cr est du chrome, Al est de l'aluminium et Y est de l'yttrium.

11. Réseau de tuyaux comprenant un premier élément de tuyau, un second élément de tuyau et le joint d'étanchéité défini selon l'une quelconque des revendications précédentes raccordant les extrémités contigües du premier élément de tuyau et du second élément de tuyau ; dans lequel :

le premier élément de tuyau comprend un passage pour acheminer du gaz fluide et un évidement femelle, coextensif au passage, sur son extrémité contigüe ;
le second élément de tuyau comprend un passage pour acheminer du gaz de combustion et un évidement femelle, coextensif au passage, sur son extrémité contigüe ;
la première partie d'extrémité du corps tubulaire est au moins partiellement positionnée à l'intérieur de l'évidement femelle du premier élément de tuyau ;
la seconde partie d'extrémité du corps tubulaire est au moins partiellement positionnée à l'intérieur de l'évidement femelle du second élément de tuyau ; et
la partie de pont du corps tubulaire s'étend sur un espace entre les extrémités contigües des éléments de tuyau et/ou est positionnée partiellement à l'intérieur des évidements femelles.

12. Système d'échappement de moteur comprenant un réseau de tuyaux selon la revendication 11, dans lequel du gaz de combustion passe à travers le passage dans le premier élément de tuyau, à travers le passage dans le corps tubulaire du joint d'étanchéité, et à travers le passage dans le second élément de tuyau.

**Figure 1**

To Engine Air Intake

To Engine Exhaust Pipe

EP 2 441 999 B1

**Figure 2 (a)**

**Figure 2 (b)**

Figure 3(a)

Figure 3(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3689114 A